# EUROPÄISCHE PATENTSCHRIFT

(11) **EP 1 656 278 B1**
(45) Veröffentlichungstag und Bekanntmachung des Hinweises auf die Patenterteilung: **09.07.2008**
(21) Anmeldenummer: 04762606.4
(22) Anmeldetag: 05.08.2004
(51) Int. Cl.: B60R 1/08

(54) **RÜCKBLICKSPIEGEL FÜR FAHRZEUGE**
REAR-VIEW MIRROR FOR VEHICLES
RETROVISEUR POUR VEHICULES

(30) Priorität: 21.08.2003 DE 10338398
(43) Veröffentlichungstag der Anmeldung: 17.05.2006
(73) Patentinhaber: Visiocorp Patents S.à.r.l., 2346 Luxembourg (LU)
(72) Erfinder: THIEL, Rolf, 70180 Stuttgart (DE); ZIPF, Volker, 73207 Plochingen (DE)
(74) Vertreter: Rausch, Gabriele
(86) Internationale Anmeldenummer: PCT/DE2004/001761
(87) Internationale Veröffentlichungsnummer: WO 2005/021331

(56) Entgegenhaltungen:
- EP-A- 0 785 103
- WO-A-00/55011
- US-A- 4 505 539
- US-A- 4 603 946
- US-A1- 2003 043 589

## Beschreibung

Die Erfindung betrifft einen Rückblickspiegel für Fahrzeuge, vorzugsweise Kraftfahrzeuge, nach dem Oberbegriff des Anspruches 1.

Bei Innenrückblickspiegeln von Kraftfahrzeugen ist das Spiegelgehäuse mit zwei Sensoren versehen, von denen der eine Sensor das vom nachfolgenden Kraftfahrzeug stammende Blendlicht und der andere Sensor das Umgebungslicht erfasst (WO 00/55011). Die beiden Sensoren erfordern eine aufwändige Steuerung, um das EC-Spiegelglas entsprechend der Stärke des Blendlichtes in Abhängigkeit vom Umgebungslicht abzudunkeln.

Beim gattungsgemäßen Rückblickspiegel (US 4 603 946 A) hat das Spiegelgehäuse ein EC-Spiegelglas, das bei Auftreten von Blendlicht mittels einer Schalteinrichtung abgeblendet wird. Sie hat einen Sensor, dem über einen Lichtleiter das Blendlicht und über einen weiteren Lichtleiter Umgebungslicht zugeführt wird. Der Sensor erhält damit einen Summenlichtstrom aus Blendlicht und Umgebungslicht. Es ist darum aufwändig und schwierig, das EC-Spiegelglas unter Berücksichtigung des Umgebungslichtes optimal abzudunkeln.

Der Erfindung liegt die Aufgabe zugrunde, den gattungsgemäßen Rückblickspiegel so auszubilden, dass sein EC-Spiegelglas auf einfache Weise zuverlässig abgedunkelt werden kann.

Diese Aufgabe wird beim gattungsgemäßen Rückblickspiegel erfindungsgemäß mit den kennzeichnenden Merkmalen des Anspruches 1 gelöst.

Beim erfindungsgemäßen Rückblickspiegel werden dem Sensor über die beiden Lichtleiter das Blendlicht und das Umgebungslicht zugeführt. Der Sensor kann an jeder geeigneten Stelle im Rückblickspiegel oder im Kraftfahrzeug angeordnet sein. Mit den Lichtleitern kann das Licht zuverlässig dem Sensor zugeführt werden, der den Lichtstrom in ein elektrisches Signal umwandelt. Es wird zur Abdunkelung des EC-Spiegelglases herangezogen. Mit dem Schalter kann der Lichtstrom zumindest des einen Lichtleiters abgeschaltet werden, so dass der Sensor dann den Lichtstrom ausschließlich über den anderen Lichtleiter erhält. Wird der Lichtstrom durch den Schalter eingeschaltet, erhält der Sensor einen Summenlichtstrom, der aus dem Blend- und dem Umgebungslicht besteht. Somit kann der Sensor mit Hilfe des Schalters die Stärke des Blend- und des Umgebungslichtes einfach ermitteln und das EC-Spiegelglas unter Berücksichtigung des Blend- und des Umgebungslichtes optimal abdunkeln. Da nur ein einziger Sensor vorgesehen ist, kann der schaltungstechnische Aufwand gering gehalten werden.

Der Rückblickspiegel kann ein Innen- und/oder ein Außenrückblickspiegel eines Kraftfahrzeuges sein. Im oder am Gehäuse dieses Rückblickspiegels können weitere Komponenten vorgesehen sein, wie eine Heizung für das Spiegelglas, eine Antenne, Lautsprecher, Leuchtmittel für Lese- und/oder Ambientebeleuchtung, ein Kompass, eine Displayeinrichtung, eine Wiederholblinkleuchte und dergleichen. Diese Komponenten können in beliebiger Kombination vorgesehen werden.

Weitere Merkmale der Erfindung ergeben sich aus den weiteren Ansprüchen, der Beschreibung und den Zeichnungen. Die Erfindung wird nachstehend anhand mehrerer in den Zeichnungen dargestellter Ausführungsbeispiele näher beschrieben. Es zeigt:
- Fig. 1: in Ansicht einen erfindungsgemäßen Rückblickspiegel eines Kraftfahrzeuges mit einem Sensor,
- Fig. 2: in schematischer Darstellung eine Schalteinrichtung des Rückblickspiegels gemäß Fig. 1,
- Fig. 3 und 4: jeweils eine weitere Schalteinrichtung in einer Darstellung entsprechend Fig. 2,
- Fig. 5a bis Fig. 5c: jeweils in schematischer Darstellung verschiedene Ausführungsformen von optischen Schaltern der Schalteinrichtung,
- Fig. 6: in schematischer Darstellung Sensorspannungen bei unterschiedlichen Lichtquellen,
- Fig. 7: in schematischer Darstellung das Meßprinzip der Schalteinrichtung.

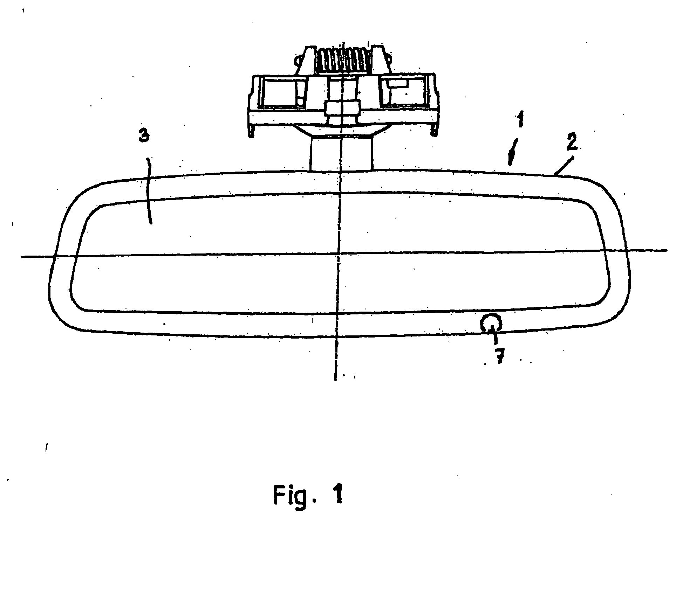

Fig. 1 zeigt einen Innenrückblickspiegel 1 eines Kraftfahrzeuges mit einem Gehäuse 2, in dessen Gehäuseöffnung ein EC-Spiegelglas 3 angeordnet ist. Um eine Blendung des Fahrers durch das auf das Spiegelglas 3 fallende Licht eines nachfolgenden Fahrzeuges zu vermeiden, ist im Spiegelgehäuse 2 bzw. dem das EC-Spiegelglas 3 umgebenden Rahmen 3 ein Sensor 7 untergebracht. Er sendet bei Auftreffen von Blendlicht ein Schaltsignal, durch das das Spiegelglas 3 in bekannter Weise abgedunkelt wird, so daß der Fahrer nicht geblendet wird. Der Sensor 7 kann selbstverständlich auch an einer beliebig anderen Stelle im Spiegelgehäuse oder gar im Fahrzeuginnenraum untergebracht sein.

Der Sensor 7 ist ein Fotosensor, der den ihm zugeführten Lichtstrom in ein elektrisches Signal umwandelt, das zur Ansteuerung des EC-Spiegelglases 3 herangezogen wird. Der Sensor 7 ist Teil einer Schalteinrichtung 20, die zwei Lichtleiter 8, 8' aufweist, die im Bereich vor dem Sensor 7 ineinander übergehen. Dem Sensor 7 liegt eine Lichtaustrittsfläche 14 der zusammengeführten Lichtleiter 8, 8' gegenüber. Die Lichtleiter 8, 8' sind so angeordnet, daß ihre Lichteintrittsfläche 15, 16 in Fahrtrichtung des Fahrzeuges nach hin,ten und nach vorne gerichtet ist. Auf die nach hinten gerichtete Eintrittsfläche 15 fällt das Blendlicht 4 des nachfolgenden Fahrzeuges, während die nach vorn gerichtete Eintrittsfläche 16 das Umgebungslicht 5 erfaßt. Das Licht wird von beiden Lichtleitern 8, 8' dem Sensor 7 zugeführt. Je nach Höhe des Lichtstromes wird das Spiegelglas 3 mehr oder weniger abgedunkelt.

Damit der Sensor 7 das B'lend- und das Umgebungslicht 4, 5 voneinander trennen kann, ist im Bereich vor der Lichteintrittsfläche 16 des Lichtleiters 8' ein optischer Schalter 9 angeordnet, mit dem die Lichteintrittsfläche 16 vorzugsweise periodisch abgedeckt werden kann. Der Sensor 7 erhält somit einmal den von beiden Lichtleitern 8, 8' zugeführten Lichtstrom und einmal nur den vom Lichtleiter 8 zugeführten Lichtstrom. Der Sensor 7 kann somit in Abhängigkeit vom Blendlicht 4 unter Berücksichtigung des Umgebungslichtes 5 ein elektrisches Signal erzeugen, um das EC-Spiegelglas 3 entsprechend abzudunkeln.

Der optische Schalter 9 kann in bekannter Weise als mechanisches System ausgebildet sein, wie Lochblenden, verschiebbare Raster, drehbare Spiegel oder dergleichen. Er kann aber auch als LCD-Element ausgebildet sein, wie sie als Displays eingesetzt werden. Der Schalter 9 kann ferner ein Shutter sein, der auf ferroelektrischen Flüssigkristallen FLC basiert.

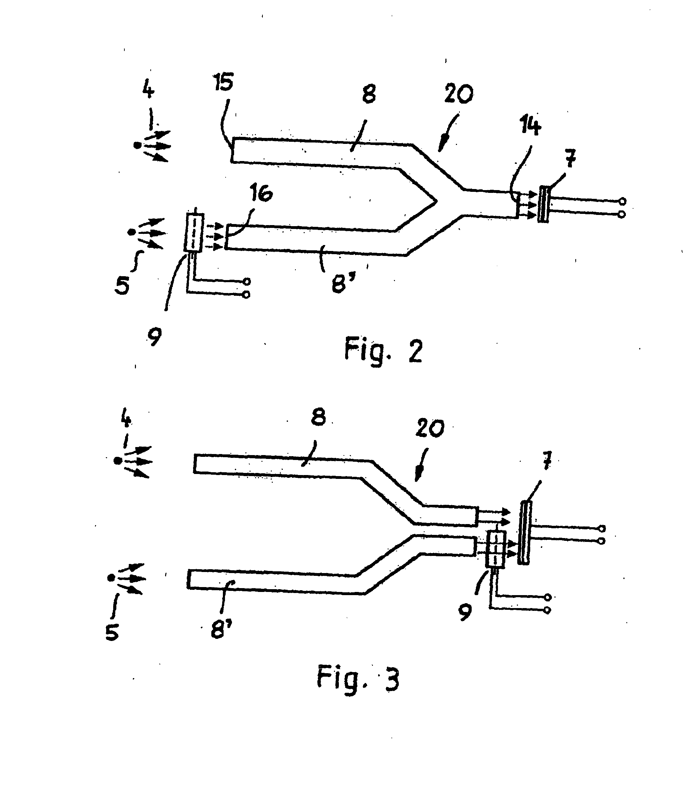

Fig. 3 zeigt eine Schalteinrichtung 20, bei der beide Lichtleiter 8, 8' getrennt voneinander bis zum Sensor 7 geführt sind. Im Unterschied zur Ausführungsform nach Fig. 2 ist der optische Schalter 9 nicht vor dem Lichtleiter 8', sondern zwischen ihm und dem Sensor 7 angeordnet. Mit dem optischen Schalter 9 wird das über den Lichtleiter 8' zugeführte Umgebungslicht 5 zum Sensor 7 durchgelassen oder abgeschottet. Der Sensor 7 erhält somit den von beiden Lichtleitern 8, 8' zugeführten Lichtstrom oder über den Lichtleiter 8 nur das Blendlicht 4. Dementsprechend erzeugt der Sensor 7 ein elektrisches Signal, das zur Abdunkelung des EC-Spiegelglases 3 herangezogen wird.

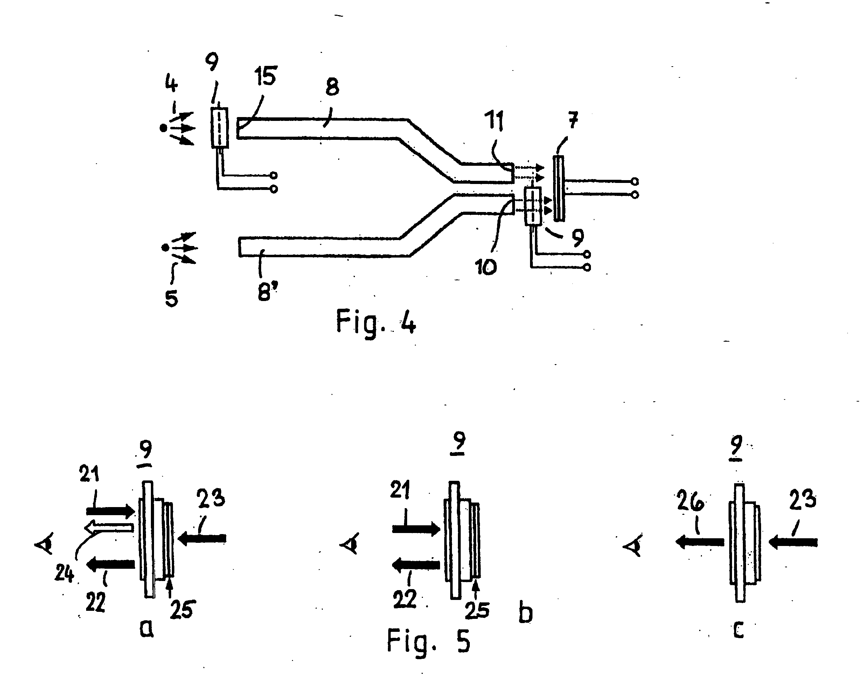

Bei der Ausführungsform nach Fig. 4 sind wie bei der zuvor beschriebenen Ausführungsform beide Lichtleiter 8, 8' getrennt voneinander bis nahe an den Sensor 7 herangeführt. Vor der Lichteintrittsfläche 15 des Lichtleiters 8 und zwischen der Lichtaustrittsfläche 10 des Lichtleiters 8' und dem Sensor 7 befindet sich jeweils ein optischer Schalter 9. Beide Schalter 9 werden abwechselnd so gesteuert, daß der Sensor 7 nur vom Lichtleiter 8 oder nur vom Lichtleiter 8' Licht erhält. Dementsprechend kann der Sensor 7 unter Berücksichtigung des Umgebungslichtes 5 das EC-Spiegelglas 3 in Abhängigkeit vom Blendlicht 4 abdunkeln.

Selbstverständlich kann auch noch, wie bei der Ausführungsform nach Fig. 2, vor der Lichteintrittsfläche 16 des Lichtleiters 8' ein dritter optischer Schalter vorgesehen werden.

Es sind auch andere Kombinationen von optischen Schaltern 9 denkbar. So können sie beispielsweise auch innerhalb der Lichtleiter 8, 8' oder zwischen dem Lichtaustrittsende 10, 11 der Lichtleiter 8, 8' und dem Sensor 7 vorgesehen sein.

Die optischen Schalter 9 jeder Schalteinrichtung 20 können unterschiedlich sein. Vorteilhaft sind die Schalter 9 der Schalteinrichtung aber gleich.

Bei den beschriebenen Ausführungsformen werden die optischen Schalter 9 in der beschriebenen Weise jeweils so angesteuert, daß das Licht durch den Lichtleiter 8, 8' zum Sensor 7 geführt oder der Lichtstrom unterbrochen wird. Wird nur an einem Lichtleiter der Lichtstrom unterbrochen (Fig. 2 und 3), so erfolgt die Ermittlung der Helligkeit der Lichtquelle durch Addition bzw. Subtraktion des Sensorsignales bei ein- und ausgeschaltetem optischen Schalter 9. Werden hingegen an beiden Lichtleitern 8, 8' separate optische Schalter 9 verwendet (Fig. 4), läßt sich die Helligkeit der beiden Lichtquellen 4, 5 durch wechselseitiges Umschalten der optischen Schalter 9 bestimmen.

Die Schaltfrequenz und dementsprechend die Auswertungsfrequenz ist dem Anwendungsfall angepaßt. So ist bei einem EC-Glas eine Schaltfrequenz > 5 Hz sinnvoll, um Änderung der Umgebung schnell genug erfassen und auswerten zu können. Die obere Grenze der Schaltfrequenz ist im Prinzip beliebig festlegbar. Für den Anwendungsfall bei Innenrückblickspiegeln ist eine niederfrequente Taktung ausreichend.

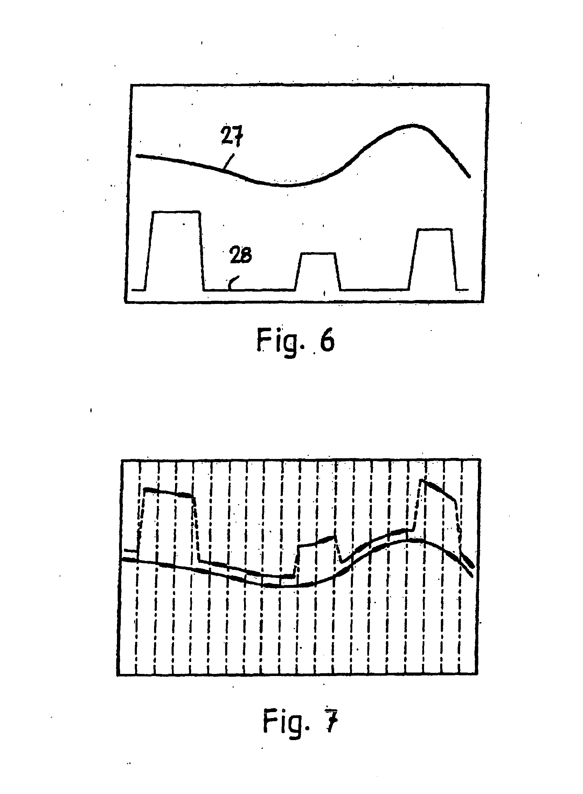

Fig. 6 zeigt im Prinzip den Spannungsverlauf des Sensors 7 bei auftreffendem Licht. Die obere Kurve 27 ist für das Umgebungslicht maßgeblich, die untere Kurve 28 für das Blendlicht 4. Bei zwei Sensoren 7 würden die Sensorspannungen vergleichbar verlaufen.

Fig. 7 zeigt im Prinzip bei einem getakteten Sensor den Verlauf des Sensorsignales. Die schwarze Linie (fett, gestrichelt) zeigt das Sensorsignal, wenn der optische Schalter 9 einmal beide Lichtquellen 4, 5 auf den Sensor 7 schaltet und wenn im nächsten Takt nur eine der beiden Lichtquellen 4, 5 auf den Sensor 7 geführt wird. Durch die Differenzbildung mit dem Signal vom vorhergehenden Takt können die Helligkeiten der einzelnen Lichtquellen 4, 5 berechnet werden. Bei einer hohen Taktrate wird der Fehler klein, wenn die Schwankungen der Lichtquelle langsam ablaufen im Vergleich zur Taktrate. Wird beispielsweise bei einem geraden Takt dem Sensor 7 das Licht der beiden Lichtquellen 4, 5 und bei einem ungeraden Takt nur das Licht der Lichtquelle 4 zugeführt, dann ergibt sich die Helligkeit der Lichtquelle 5 nach der Gleichung gerader Takt - ungerader Takt = Lichtquelle 5.

Bei einem LCD-Element als optischer Schalter 9 besteht die Möglichkeit, an sich bekannte reflektive, transflektive oder transmissive LCD's einzusetzen. Bei den zuvor beschriebenen Ausführungsformen nach den Fig. 2 bis 4 ist die Verwendung transmissiver LCD's von Vorteil. Aber auch reflektive LCD's sind für die Schalter geeignet.

Wenn als optischer Schalter 9 ein Shutter verwendet wird, besteht dieser vorteilhaft aus drei Schichten, und zwar um 90° gedrehten Filtern, die das Licht polarisieren und zwischen denen ein LC-Medium als dritter Filter vorgesehen ist. Durch elektrische Ansteuerung des LC-Mediums kann das Licht wieder um 0° bis 90° gedreht werden. Der Shutter kann somit Licht durchlassen oder den Lichtdurchgang sperren. Aufgrund der Polarisationsfilter liegt die maximale Transmission bei etwa 50 %.

Die Fig. 5a bis 5c zeigen in schematischer Darstellung verschiedene Ausbildungen eines LCD-Elementes. Der optische Schalter 9 in Form eines LCD-Elementes gemäß Fig. 5a ist als transflektives LCD-Element ausgebildet. Auf das LCD-Element fällt von der Betrachterseite aus (durch ein Auge gekennzeichnet) das Licht 21 einer Lichtquelle. Mit dem Pfeil 22 ist das gegen den Betrachter gerichtete reflektierte Licht gekennzeichnet. Auf die andere Seite des LCD-Elementes fällt das Licht 23 einer rückwärtigen Lichtquelle. Mit dem Pfeil 24 ist das reflektierte Licht gekennzeichnet. Das LCD-Element 9 hat außerdem einen Reflektor 25 an seiner Rückseite.

Fig. 5b zeigt in schematischer Darstellung ein reflektives LCD-Element. Das von der Betrachterseite auf dieses LCD-Element 9 fallende Licht 21 wird zum Betrachter hin reflektiert (Pfeil 22).

Fig. 5c schließlich zeigt in schematischer Darstellung ein transmissives LCD-Element 9. Das von der Rückseite auf das LCD-Element fallende Licht 23 tritt durch das LCD-Element 9 hindurch und tritt als transmittiertes Licht 26 an der Betrachterseite wieder aus.

Mit den beschriebenen Anordnungen läßt sich die Helligkeit des Umgebungs- und Blendlichtes 5 bzw. 4 beim Einsatz nur eines einzigen Sensors 7 einfach ermitteln und dadurch auf konstruktiv einfache Weise eine optimale Abblendung des Spiegelglases 3 erreichen.

## Patentansprüche

1. Rückblickspiegel für Fahrzeuge, vorzugsweise Kraftfahrzeuge, mit einem Spiegelgehäuse (2), das ein EC-Spiegelglas (3) aufweist, das bei Auftreten von Blendlicht (4) mittels einer einen Sensor (7) aufweisenden Schalteinrichtung (20) abblendbar ist, die wenigstens einen Lichtleiter (8, 8'), mit dem zumindest das Blendlicht (4) dem Sensor zuführbar ist, und wenigstens einen weiteren Lichtleiter (8, 8') aufweist, mit dem Umgebungslicht (5) dem Sensor zuführbar ist,
**dadurch gekennzeichnet, dass** der Lichtstrom zumindest des einen Lichtleiters (8, 8') mittels wenigstens eines Schalters (9) abschaltbar ist.

2. Rückblickspiegel nach Anspruch 1,
**dadurch gekennzeichnet, dass** die beiden Lichtleiter (8, 8') getrennt voneinander bis zum Sensor (7) geführt sind.

3. Rückblickspiegel nach Anspruch 1,
**dadurch gekennzeichnet, dass** die beiden Lichtleiter (8,8') eine gemeinsame, dem Sensor (7) zugewandte Lichtaustrittsfläche (14) haben.

4. Rückblickspiegel nach einem der Ansprüche 1 bis 3,
**dadurch gekennzeichnet, dass** als Schalter ein optischer Schalter (9) vorgesehen ist.

5. Rückblickspiegel nach Anspruch 4,
**dadurch gekennzeichnet, dass** der optische Schalter (9) innerhalb des Lichtleiters (8, 8') liegt.

6. Rückblickspiegel nach Anspruch 4,
**dadurch gekennzeichnet, dass** der optische Schalter (9) vor der Lichtaustrittsfläche (15, 16) des Lichtleiters (8, 8') angeordnet ist.

7. Rückblickspiegel nach Anspruch 4,
**dadurch gekennzeichnet, dass** der optische Schalter (9) zwischen der Lichtaustrittsfläche (10, 11) des Lichtleiters (8, 8') und dem Sensor (7) vorgesehen ist.

8. Rückblickspiegel nach einem der Ansprüche 4 bis 7,
**dadurch gekennzeichnet, dass** der optische Schalter (9) periodisch ein- und ausschaltbar ist.

9. Rückblickspiegel nach einem der Ansprüche 4 bis 8,
**dadurch gekennzeichnet, dass** der optische Schalter (9) durch ein mechanisches System, wie Lochbleche, verschiebbares Raster, Drehspiegel oder dergleichen gebildet ist.

10. Rückblickspiegel nach einem der Ansprüche 4 bis 8,
**dadurch gekennzeichnet, dass** der optische Schalter (9) durch ein LCD-Element gebildet ist.

11. Rückblickspiegel nach einem der Ansprüche 4 bis 8,
**dadurch gekennzeichnet, dass** der optische Schalter (9) durch ferroelektrische Flüssigkristalle gebildet ist.

## Claims

1. A rearview mirror for vehicles, preferably motor vehicles, comprising a mirror housing (2), having an EC mirror glass (3), which can be dimmed upon incidence of glare light (4) by means of a switching device (20), comprising a sensor (7), wherein said switching device (20) comprises at least one light conductor (8, 8'), by means of which the glare light (4) can be fed to the sensor, and at least one additional light conductor (8, 8'), by means of which ambient light (5) can be fed to the sensor, wherein the luminous flux of at least one light conductor (8, 8') can be cut off by means of at least one switch (9).

2. A rearview mirror according to claim 1, wherein the two light conductors (8, 8') are run up to the sensor (7), separate from one another.

3. A rearview mirror according to claim 1, wherein the two light conductors (8, 8') comprise a common light output surface (14) facing the sensor (7).

4. A rearview mirror according to one of the claims 1 through 3, wherein an optical switch (9) is provided as a switch.

5. A rearview mirror according to claim 4, wherein the optical switch (9) is disposed within the light conductor (8, 8').

6. A rearview mirror according to claim 4, wherein the optical switch (9) is disposed in front of the light output surface (15, 16) of the light conductor (8, 8').

7. A rearview mirror according to claim 4, wherein the optical switch (9) is provided between the light output surface (10, 11) of the light conductor (8, 8') and the sensor (7).

8. A rearview mirror according to one of the claims 4 through 7, wherein the optical switch (9) can be turned on and off periodically.

9. A rearview mirror according to one of the claims 4 through 8, wherein the optical switch (9) is formed by a mechanical system like apertures, movable grids, rotating mirrors, or similar.

10. A rearview mirror according to one of the claims 4 through 8, wherein the optical switch (9) is provided by an LCD element.

11. A rearview mirror according to one of the claims 4 through 8, wherein the optical switch (9) is provided by ferro-electric liquid crystals.

## Revendications

1. Rétroviseur pour véhicules, de préférence pour véhicules automobiles, avec un boîtier de rétroviseur (2) comprenant un miroir électrochrome EC (3) pouvant être, à l'apparition de lumière éblouissante (4), obscurcit au moyen d'un dispositif de commutation (20) comprenant un détecteur (7), constitué d'au moins un guide de lumière (8, 8'), à l'aide duquel au moins la lumière éblouissante (4) est transmissible au détecteur, et au moins un guide de lumière supplémentaire (8, 8'), à l'aide duquel la lumière environnante (5) est transmissible au détecteur,
**caractérisé en ce que** le flux de lumière d'au moins un guide de lumière (8, 8') peut être désactivé au moyen d'au moins un commutateur (9).

2. Rétroviseur selon la revendication 1, **caractérisé en ce que** les deux guides de lumière (8, 8 ') sont dirigés séparément l'un de l'autre jusqu'au détecteur (7).

3. Rétroviseur selon la revendication 1, **caractérisé en ce que** les deux guides de lumière (8, 8') ont une surface de sortie de lumière (14) commune tournée vers le détecteur (7).

4. Rétroviseur selon l'une des revendications 1 à 3, **caractérisé en ce qu'**un commutateur optique (9) est prévu comme commutateur.

5. Rétroviseur selon la revendication 4, **caractérisé en ce que** le commutateur optique (9) se trouve à l'intérieur du guide de lumière (8, 8').

6. Rétroviseur selon la revendication 4, **caractérisé en ce que** le commutateur optique (9) est disposé devant la surface de sortie de lumière (15, 16) du guide de lumière (8, 8').

7. Rétroviseur selon la revendication 4, **caractérisé en ce que** le commutateur optique (9) est prévu entre la surface de sortie de lumière (10, 11) du guide de lumière (8, 8') et le détecteur (7).

8. Rétroviseur selon l'une des revendications 4 à 7, **caractérisé en ce que** le commutateur optique (9) peut être activé et désactivé périodiquement.

9. Rétroviseur selon l'une des revendications 4 à 8, **caractérisé en ce que** le commutateur optique (9) est formé par un système mécanique, tels que des tôles perforées, trame coulissante, miroir orientable ou équivalents.

10. Rétroviseur selon l'une des revendications 4 à 8, **caractérisé en ce que** le commutateur optique (9) est formé par un élément à cristaux liquides LCD.

11. Rétroviseur selon l'une des revendications 4 à 8, **caractérisé en ce que** le commutateur optique (9) est formé par des cristaux liquides ferroélectriques.
